Europäisches Patentamt

(19) European Patent Office

Office européen des brevets

(11) EP 0 717 552 A2

(12) EUROPEAN PATENT APPLICATION

(43) Date of publication:
19.06.1996 Bulletin 1996/25

(51) Int. Cl.⁶: H04N 1/405

(21) Application number: 95119410.9

(22) Date of filing: 08.12.1995

(84) Designated Contracting States:
DE FR GB

(30) Priority: 12.12.1994 JP 331436/94

(71) Applicant: FUJI XEROX CO., LTD.
Minato-ku Tokyo 107 (JP)

(72) Inventors:
• Oda, Yasuhiro,
c/o Fuji Xerox Co., Ltd.
Ashigarakami-gun, Kanagawa 259-01 (JP)
• Arai, Kazuhiko,
c/o Fuji Xerox Co., Ltd.
Ashigarakami-gun, Kanagawa 259-01 (JP)

• Iwaoka, Kazuhiro,
c/o Fuji Xerox Co., Ltd.
Ashigarakami-gun, Kanagawa 259-01 (JP)
• Yamashita, Takayuki,
c/o Fuji Xerox Co., Ltd.
Ashigarakami-gun, Kanagawa 259-01 (JP)
• Higashimura, Masayo,
c/o Fuji Xerox Co., Ltd.
Ashigarakami-gun, Kanagawa 259-01 (JP)
• Kubo, Masahiko,
c/o Fuji Xerox Co., Ltd.
Ashigarakami-gun, Kanagawa 259-01 (JP)

(74) Representative: Hoffmann, Eckart, Dipl.-Ing.
Patentanwalt,
Bahnhofstrasse 103
82166 Gräfelfing (DE)

(54) **Image forming apparatus**

(57) An image forming apparatus having first image density signal conversion means (405) for converting a multi-valued image density input signal to an image density output signal at a timing synchronizing with a signal clock, second image density signal conversion means (406) for converting part of the image density input signal to an image density output signal indicating a value where an image is not developed, selection signal generation means for outputting a selection signal with a longer period than the signal clock to select the first or second image density signal conversion means in a predetermined order, pattern signal generation means (401) for generating a pattern signal having a longer period than the signal clock, phase control means (409) for shifting the phase of the pattern signal, pulse width modulation means (401) for outputting a pulse width modulation signal, and image formation means for forming images partially based on the pulse width modulation signal.

FIG.1

EP 0 717 552 A2

**Description**

The invention relates to an image forming apparatus employing an electrophotographic method that forms an image by scanning a light sensitive medium with a light beam. The apparatus utilizes a pulse width modulation signal for an image density signal to form an electrostatic image, and develops the electrostatic image with an appropriate toner.

In known printers and copying machines, a digital electrophotographic method is used to provide high-speed image formation with high quality images. In this method, exposure with pulse width modulation utilizing, for example, an analog screen generator is often conducted for image graduation reproduction by scanning a light sensitive medium with a light beam. A spot diameter and the number of light beam lines are maintained constant in the formation of the image, regardless of variations in density. Therefore, the contrast in exposure profile in the low density portion is reduced. The reproduction capability of dots or lines and the reproduction stability of gradation or tones, depending on environments, will deteriorate because of the minimal exposure.

To overcome the above-noted problems, stabilizing the amount of light beam, density of toner in a developer housing or the like have been known. The process improves the reproduction stability of gradation or tones, by measuring the temperature, humidity, or density of toner in the developer housing, and controlling a development bias potential or current transfer value. This method, however, requires a high precision sensor and/or control mechanism. Thus, this method is complex and expensive.

Moreover, image formation with a small number of lines can improve the contrast of the exposure profile in the low density portion and the reproduction capability of dots or lines in the low density portion. However, for halftone character images, the image construction is more easily recognized because the number of lines is reduced. This results in a deterioration of the image quality.

It may be possible to make the spot diameter of the light beam small enough to improve the contrast in exposure profile in the low density portion, while also maintaining the number of lines. The character image can then be reproduced with a sufficient image quality. However, an image formation optical system to achieve this must be extremely precise and expensive. Accordingly, this method and its system are impractical.

Other methods have also been proposed to increase the reproduction capability for dots or lines by varying light beam diameter or its luminous intensity to reduce deterioration of the contrast in exposure profile. These methods, however, require a complicated control mechanism that changes the light beam spot diameter or luminous intensity. Therefore, these methods and its associated systems are also complex and expensive.

The present invention has been made in view of the above circumstances. It sets forth an image formation apparatus, which resolves the above described problems and defects evident in conventional devices.

An aspect of the present invention is to provide an image formation apparatus with an improved reproduction capability of dots or lines in a low density portion, and an increased stability in the reproduction of gradations and tones.

Additional aspects and advantages of the invention will be set forth in the following description and will be obvious from the description, or may be learned by practice of the invention. The aspects and advantages of the invention may be realized and attained by the instrumentalities, means and combinations particularly pointed out in the appended claims. It will be understood that each of the features described herein can be taken separately or jointly.

An image forming apparatus according to an aspect of the invention may comprise first image density signal conversion means, which has a first conversion property or factor that converts a multi-valued image density input signal to an image density output signal in synchronization with an image density signal clock, second image density signal conversion means, which has a second conversion property or factor different from the first conversion property that converts a part of the image density input signal corresponding to a low density portion to an image density output signal indicating a value within a range where an image is not developed; selection signal generation means for outputting a selection signal, with a longer period than that of the image density signal clock, to select the first or second image density signal conversion means in a predetermined order, where a phase of the selection signal can be shifted for each one or more main scanning signals; pattern signal generation means for generating a pattern signal having a longer period than that of the image density signal clock; phase control means for shifting the phase of the pattern signal generated by the pattern signal generation means to form a screen image with a predetermined screen angle; pulse width modulation means for outputting a pulse width modulation signal generated by modulating a pulse width of the image density output signal from the first and second image density signal conversion means utilizing the pattern signal; and image formation means for forming an image based on with the pulse width modulation signal from the pulse width modulation means.

Another aspect of the image formation apparatus may include conversion means for converting an image density signal, conversion selecting means for selecting a conversion property of the conversion means, pulse width modulation means for modulating the pulse width of the image density signal and image formation means for forming an image based on the pulse width modulation signal.

The conversion means may include at least two image density signal conversion means having different properties to convert a multivalued image density signal in synchronization with the image density signal clock. At least one of the image density signal conversion means may have a property for converting a part of the input image density signal, which corresponds to the low density portion to 0, or the image density signal, which corresponds to the range where an electrostatic latent image is not developed.

The conversion selecting means may include selection signal generating means for outputting a selection signal for selecting the image density conversion means with a longer period than that of the image density signal clock. The phase variation for every one or more start of the scanning (SOS) signals and selection means, may periodically select an appropriate image density conversion means, based on the selection signal from the selection signal generating means.

The pulse width modulation means may, include pattern signal generation means, which can generate a pattern signal having a longer period than the image density signal clock, phase control means that may successively vary the phase of a signal generated by the pattern signal generation means for every one or more horizontal scanning synchronizing signals to form a screen image with a predetermined screen angle, and modulation means for carrying out pulse modulation on the image density signal from the conversion means by utilizing the pattern signal. The image formation means may form an image based on in part the pulse width modulation signal from the pulse width modulation means.

One aspect of the selection signal generation means may include a first counter, which can count the horizontal scanning synchronization signals, storing means which can store an initial counted value to determine the phase of the selection signal and selecting and outputting the stored value based on a value from the first counter, and a second counter, for initializing based on in part the initial counted value from the storing means. Thus, generation of a selection signal by dividing the image density signal clock is possible.

Another mode of the selection signal generation means may include a first counter for counting the horizontal scanning synchronization signals; storing means for storing a value representing plural phases and selecting and outputting a stored value based on in part the value output by the first counter, signal generation means for generating plural signals of different phases by dividing the image density signal clock; and means for selecting one of the plural signals of different phases output by the signal generation means based on the output from the storing means, and outputting the selected signal as the selection signal.

The image formation apparatus should satisfy the following inequality:

$$K/L \leqq 1/2,$$

wherein L is the gradation number of the image density signal in the at least two image density signal conversion means and K is the largest conversion value of the image density signal for portions having different properties. Here, for example where the image density signal is composed of digital data of x bits, the gradation number $L=2^x$.

Another aspect of the image forming apparatus includes image formation means that may include light beam scanning means, which performs scanning on the light sensitive medium with a light beam, and an image formation optical system, which converges the light beam and forms light beam spots of a predetermined size on a light sensitive medium. When the distance between adjacent pixels in the main scanning direction in forming an image of low density portion is $d_p$ (mm) and the spot diameter ($1/e^2$) of the light beam in the direction of main scanning on the light sensitive medium is $d_B$ (mm), the image formation apparatus should satisfy the following inequality:

$$d_b \leqq (1/3)d_p.$$

Another aspect of the image forming apparatus may include conversion/non-conversion discrimination means for discriminating whether an image signal line-reduction conversion of each group of image density signals has been conducted, selection means for determining whether the group of image density signals has been converted by the image signal conversion means and then outputted with or without conversion, and operation means for obtaining a single image density signal by executing a predetermined operation on a plural image density signals in each group, and outputting the obtained image density signal to the plural image density conversion means.

The light beam scanning means can scan a light sensitive medium with the light beam to form a light beam spot with a predetermined size. The pulse width modulation means can determine the time for an on-off control of the light beam based on in part the image density signal. Thereby, an image can be formed on the light sensitive medium, based on the image density signal. Later, the electrostatic image may be developed with a powdered toner, a liquid toner, or the like to form an image.

With respect to the exposure energy profiles on the light sensitive medium with an exposure of the light sensitive medium using the light beam scanning means, the ratio of the distance between adjacent pixels in the of main scanning direction $d_p$ (mm) to the spot diameter of the light beam $d_B$ (mm), is represented as D. If the number of lines per inch (lpi) is indicated by N, the apparatus should satisfy the following equality:

$$d_p = 25.4/N$$

$$D = d_B/d_p$$

In the electrophotographic process, a development bias potential may be provided to prevent attachment of toner to a non-image portion. With the reduction of the pulse width percentage, the exposure energy profile contrast can also be reduced. The amount of exposure energy exceeding a value, which corresponds to the development bias potential in the profile, can be decreased. Thus, it may become impossible to reproduce dots or lines.

If the value of D is small, and reduced to 1/1, 1/2, or 1/3, the contrast deterioration can be reduced. Therefore, when the spot diameter of the light beam $d_B$ is maintained constant, the suitable reproduction of dots or lines in the low density portion may be possible. Further, reproduction stability of gradation and tones, depending on environments, can be increased by reducing the number of lines N and reducing the value of D.

The reproduction of the low density portion is important for a high quality image. Accordingly, it is necessary to reproduce images at least a 10% pulse width. In the instant invention, no dots or lines are reproduced when pulse width is 10% and the value of D is 1/1. The lines and dots can be reproduced when the pulse width is 10% and the value of D is 1/3. Consequently, by setting the value of D to be 1/3 or less, $d_B \leq (1/3)d_p$ and a stable image reproduction in the low density portion can be achieved.

The number of lines in the low density portion may be reduced by converting the image density signal. The least two image density signal conversion means have different conversion properties. At least one of the conversion properties converts a part of the input image density signal corresponding to the low density portion 0, or to the image density signal, representing a part of the image that is not developed. Therefore, if the image density signal indicates a low density, there will be no output.

Another aspect of the image forming apparatus includes conversion means that may operate in synchronization with the image density signal clock, and can be selected by a selection signal, which has a longer period than the image density signal clock. Accordingly, even if phase control means for changing the phase of the pattern signal has a predetermined period, i.e., the timing of generating the pattern signal to form an image a predetermined screen angle, the conversion means can operate, in synchronization with the image density signal clock conforming, to change of the phase. Further, it is possible to change the order of operation of the at least two image density signal conversion means for every exposure scanning.

Another aspect of the image forming apparatus includes image density signal conversion means that may also operate in synchronization with the image density signal clock, so the conversion means can be selected by the selection signal, which has a longer period than that of the image density signal clock. The pulse width modulation can be carried out with a pattern signal having a longer period than the image density signal clock. Thus, for example, where m pixels are formed from n image density signals using the pattern signal of the predetermined period, m<n.

Where the image density signal conversion means operates in synchronization with the image density signal clock, the pattern signal phase may be shifted by 1/4 phase for every sub-scanning process. The conversion means may be operated in the order of A, A, B, B, A, A, B, B, ..., in the main scanning direction. In the next scanning, the conversion means may be operated in the order of B, B, A, A, B, B, A, A, .... Moreover, in the next scanning, the order of operation is B, A, A, B, B, A, A, B, ..., in the main scanning direction, where the order of operation is periodically changed.

The order of operation of the image density signal conversion means, which may operate a time divisionable synchronization with the image density signal clock, may be changed in the sub-scanning direction for every one or more scanning lines. Accordingly, input image density signals which correspond to the low density portion, can be partially removed. In the pulse width modulation output, the number of lines may be reduced in the low density portion, and increased in the middle to high density portion, both without phase shifting error. Further, a portion where the electrostatic image is formed when the uniform low density signal is input can be indicated by a dot pattern.

Where the image density signal conversion means has a conversion property or factor so the largest converted value of the image density signal in an area having different properties exceeds 50% of the number of gradations of the image density signal, which is selected from the at least two image density signal conversion means, an image density signal converted to be 50% or more of the number of gradations may be compared with a pattern signal having a predetermined period for modulating the pulse width. Thus, a desirable electrostatic image formation, which corresponds to increase of the image density signal, may be impossible for the 4th, 8th and 12th image density signals in a second line or 1st signal, 5th and 9th image density signals in a fourth line, even if the converted value exceeds 50% of the number of gradations. Therefore, the largest converted value of the image density signal must be smaller than 50% of the number of gradations of the image density signal.

The pulse width modulation means may perform pulse width modulation based on an analog density signal and the pattern signal with a predetermined period. Two or more pattern signals having different periods may be prepared, and one of them may be selected as necessary. Further, it is then possible to carry out an acceptable reproduction of a line image or an edge portion of an image, regardless of conversion has been performed.

When the image formation apparatus includes means for changing the timing for generating the predetermined period of a pattern signal to form an image with a predetermined screen angle, the reproduction stability of gradation or tones and the reproducibility of dots or lines in the low density portion can be improved. Moreover, it will become difficult to recognize uneven coloring or changes in hue, thus, the image quality can be improved.

The conversion property or factor of the image density signal conversion means will now explained based on in part the output of one of the conversion means corresponding to the low density portion at 0, to facilitate the explanation.

Generally, in an electrophotographic apparatus using a light beam scanning process, values corresponding to a range where an image is not developed exist, though the output of the conversion means is not 0. This is because a laser diode for example, does not respond to minute input signals or a development bias potential applied to restrain attachment of toner to non-image portion of the recording sheet. In the image density signal conversion means, it is not necessary that the output of one of the conversion means corresponding to the low density portion be at 0. For example, the output of the conversion means corresponding to the low density portion may be converted into values for a range where an image is not developed.

Therefore, it is another aspect of the image forming apparatus to reduce the number of lines by a conversion property or factor of the conversion means, when the property is for a value and range where the image may not develop. The image forming apparatus includes first image density signal conversion means, which has a first conversion property for converting a multi-valued image density input signal to an image density output signal in synchronization with an image density signal clock; second image density signal conversion means, which has a second conversion property different from the first conversion property, for converting a part of the image density input signal corresponding to a low density portion to an image density output signal indicating a value for a range where an image may not develop; selection signal generation means for outputting a selection signal with a longer period than that of the image density signal clock to select, in a predetermined order, the first or second image density signal conversion means, where a phase of the selection signal is shifted for each one or more main scanning synchronizing signals; pattern signal generation means for generating a pattern signal with a longer period than the image density signal clock; phase control means for shifting the phase of the pattern signal generated by the pattern signal generation means for each one or more main scanning synchronizing signals to form a screen image with a predetermined screen angle; pulse width modulation means for outputting a pulse width modulation signal generated by modulating the pulse width of the image density output signal from the first and second image density signal conversion means; and image formation means for forming an image based on the pulse width modulation signal from the pulse width modulation means.

The first conversion property converts the part of the image density input signal corresponding to the low density portion to an image density output signal indicating a value within a range where an image is developed. Selection signal generation means may include a first counter for counting the main scanning synchronizing signals and outputting a signal showing the number of the main scanning synchronizing signals; memory means for storing an initial counter value to determine the phase of the selection signal and selecting and outputting the initial counter value based on in part the signal output from the first counter; and a second counter, which is initialized by the initial counter value output from the memory means, for dividing the image density signal clock to generate the selection signal.

The first counter may count the main scanning synchronizing signals and output a signal showing the number of the main scanning synchronizing signals. The memory means may store a value indicating plural phases and outputting the value indicating plural phases based on in part the signal output from the first counter; signal generation means can generate plural signals having different phases by dividing the image density signal clock; and selection means that may select one signal from the plural signals from the signal generation means based on in part the output of the memory means and outputting the selected signal as the selection signal.

Further, the image forming apparatus has another aspect, when $K/L \leq 1/2$, where L is the number of gradations of the image density output signal and K is a maximum value of the image density output signal where the first and second image density signal conversion means have different conversion properties.

The invention also achieves other aspects of the invention by providing image formation means which can comprise light beam scanning means for relatively scanning a light sensitive medium with a light beam; an image formation optical system for converging the light beam scanned by the light beam scanning means to form a light beam spot of a predetermined size on the light sensitive medium so $d_B \leq (1/3)d_p$, where $d_p$ (mm) is the distance between the adjacent light beam spots in a main scanning direction on the light sensitive medium and $d_B$ (mm) is the diameter of the light beam spot in the main scanning direction forming an image, when the image density output signal indicates a value for a range where an image may not be developed.

Further, aspects of the invention are achieved with an image forming apparatus that includes first image density signal conversion means with a first conversion property that converts a multi-valued image density input signal to an image density output signal; second image density signal conversion means with a second conversion property, which is different from the first conversion property, that converts a part of the image density input signal corresponding to a low density portion to an image density output signal indicating a range where an image is not developed; selection signal generation means for outputting a selection signal having a longer period than an image density signal clock to select the first or second image density signal conversion means in a predetermined synchronized order with the image density signal clock, where a phase of the selection signal is shifted for each one or more of the main scanning synchronizing signals; pattern signal generation means for generating a pattern signal with a longer period than the image density signal clock; phase control means for shifting the phase of the pattern signal generated by the pattern signal generation means for each one or more of the main scanning synchronizing signals to form a screen image with a predetermined screen angle; pulse width modulation means for outputting a pulse width modulation signal generated by modulating pulse width of the image density output signal using the pattern signal; and image formation means for forming an image based on in part the pulse width modulation signal from the pulse width modulation means.

The first conversion property may convert the part of the image density input signal corresponding to the low density portion to an image density output signal that indicates a range where an image may be developed. The selection signal generation means may include a first counter counting the main scanning synchronizing signals and outputting a signal indicating the number of the main scanning synchronizing signals; memory means storing an initial counter value for determining the phase of the selection signal, and selecting and outputting the initial counter value based on the signal output from the first counter; and a second counter, initialized by the initial counter value from the memory means, for dividing the image density signal clock to generate the selection signal.

Further, the selection signal generation means may also comprise memory means that stores a value indicating plural phases and outputs the value based on in part the signal output from the first counter; signal generation means that generates plural signals with different phases by dividing the image density signal clock; and selection means that selects one signal from the plural signals based on in part the output of the memory means, and outputting the selected signal.

Further, where L is the number of gradations of the image density output signal and K is a maximum value of an image density output signal where the first and second image density signal conversion means have different conversion properties the image formation apparatus should satisfy the condition $K/L \leq 1/2$ .

The image formation means may include light beam scanning means for relatively scanning a light sensitive medium with a light beam; an image formation optical system for converging the light beam to form a light beam spot of a predetermined size on the light sensitive medium; where $d_p$ (mm) is a distance between the light beam spots adjacent each other in a main scanning direction on the light sensitive medium and $d_B$ (mm) is a diameter of the light beam spot in the main scanning direction in forming an image when the image density output signal indicates a range where the image is not developed, the image formation apparatus should satisfy the condition $d_B \leq (1/3)d_p$ .

Also, other aspects of the invention can be achieved by providing an image forming apparatus including first image density signal conversion means, which converts a multi-valued image density input signal to an image density output signal with a first conversion property; second image density signal conversion means, which has a second conversion property different from the first conversion property, for converting a part of the image density input signal corresponding to a low density portion to an image density output signal indicating a range where an image is not developed; conversion/non-conversion discrimination means that determines whether conversion by the first and second image density signal conversion means has been conducted on each group of adjacent image density input signals; signal selection means for selecting one output after the conversion of each group by the first and second image density signal conversion means and output without conversion of each group by the first and second image density signal conversion means based on in part a result of the determination of the conversion/non-conversion discrimination means; selection signal generation means that outputs a selection signal to select the first or second image density signal conversion means in a predetermined order, where the phase of the selection signal is shifted for each one or more main scanning synchronizing signals; pattern signal generation means that generates a pattern signal; phase control means that shifts the phase of the pattern signal generated by the pattern signal generation means for each one or more main scanning synchronizing signals to form a screen image with a predetermined screen angle; pulse width modulation means that outputs a pulse width modulation signal generated by modulating a pulse width of the signal from the pattern signal; and image formation means for forming an image based on in part the pulse width modulation signal from the pulse width modulation means.

Further, the image forming apparatus may include operation means that performs predetermined operations on a plural of image density input signals in each adjacent group of image density input signals, to obtain an image density synthesizing signal. The operation means also inputs the image density synthesizing signal to the first and second image density signal conversion means.

The invention will be described in conjunction with the following drawings in which like reference numerals designate like elements and wherein:

Fig. 1 illustrates an image formation apparatus with pulse width modulation means according to an embodiment of the invention;

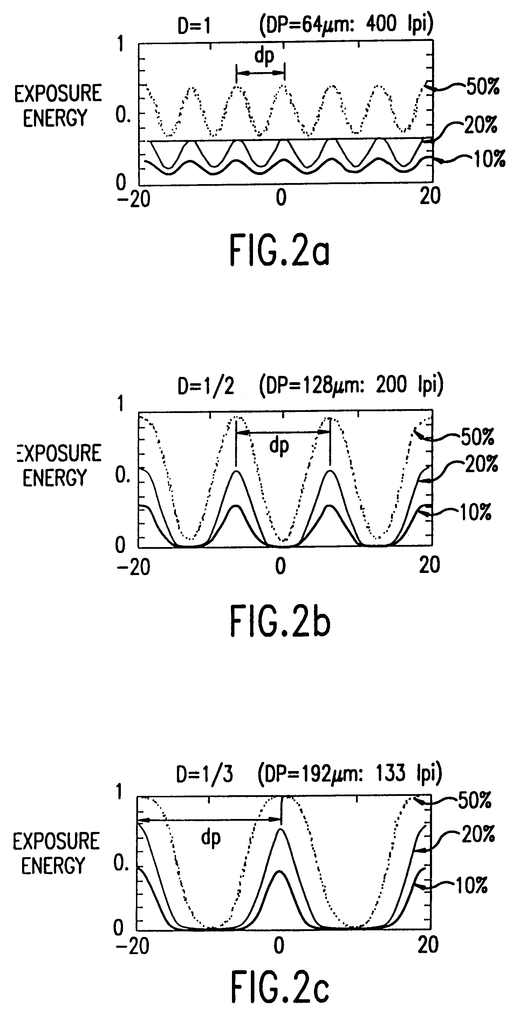

Figs. 2a - 2c illustrate the operation of the image formation apparatus;

Fig. 3 is a schematic view of the image formation apparatus according to an embodiment of the invention;

Fig. 4 illustrates a light beam scanning device;

Fig. 5 illustrates an LUT selecting circuit;

Fig. 6 illustrates another construction of an LUT selecting circuit;

Figs. 7a and 7b illustrate data conversion properties for the LUT of the image formation apparatus;

Fig. 8 illustrates a waveform generation process for the pulse width modulation means;

Fig. 9 illustrates a waveform generation process for the pulse width modulation means;

Fig. 10 illustrates a waveform generation process for the pulse width modulation means;

Fig. 11 illustrates a waveform generation process for the pulse width modulation means;

Fig. 12 illustrates a waveform generation process for the pulse width modulation means;

Figs. 13a - 13g illustrate pixel arrangements in the image formation apparatus;

Figs. 14a - 14g illustrate pixel arrangements in the image formation apparatus;

Fig. 15 illustrates an image formation apparatus with pulse width modulation means according to another embodiment of the invention;

Figs. 16a and 16b illustrate data conversion properties of an LUT of the image formation apparatus;

Fig. 17 illustrates pulse width modulation means according to a second embodiment;

Figs. 18a and 18b illustrate data conversion properties of an LUT for a comparative example;

Figs. 19a and 19b illustrate pixel arrangements in an image formation apparatus for a comparative example;

Figs. 20(a) and 20(b) show data conversion properties of the LUT of the image formation apparatus;

Fig. 21 illustrates results for an evaluation of image quality;

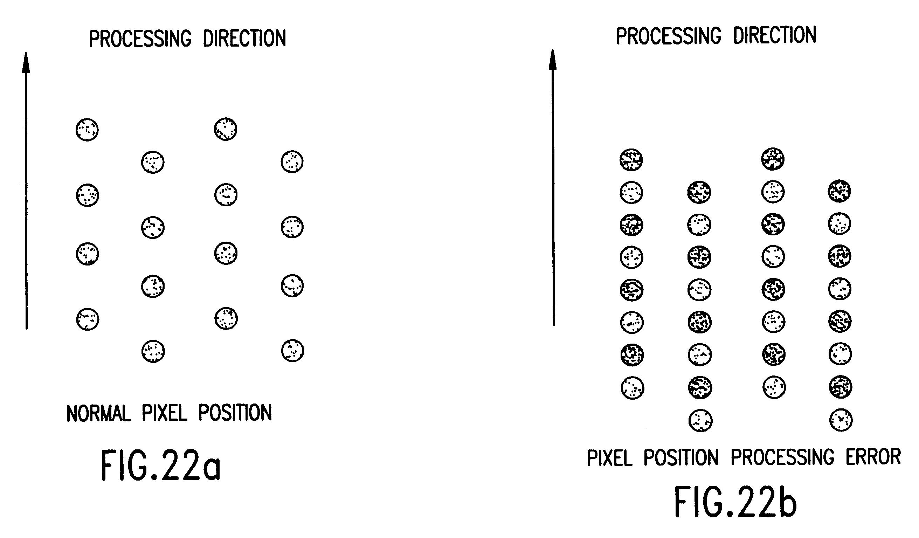

Fig. 22 illustrates generation of pixel registration error in a processing direction; and

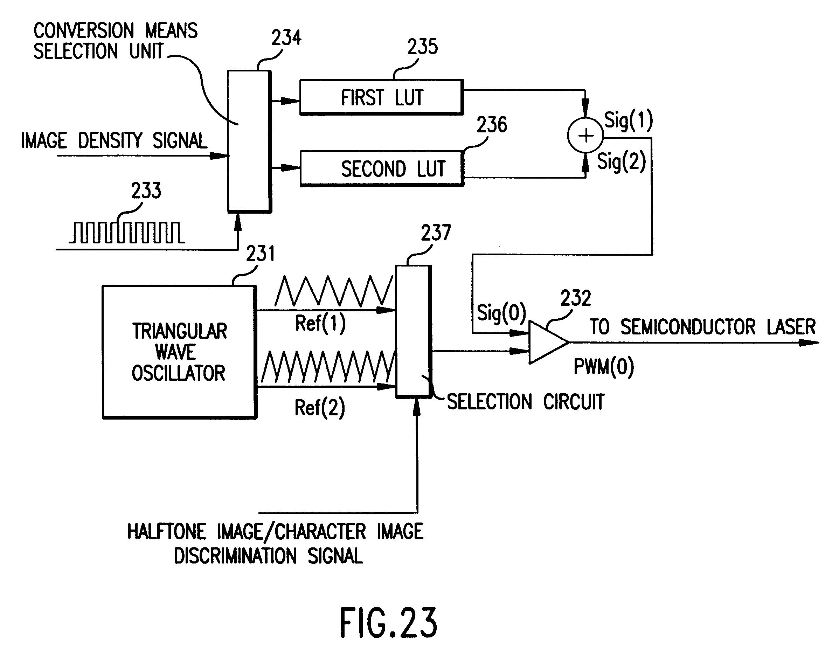

Fig. 23 illustrates a conventional image formation apparatus.

The preferred embodiments of an image formation apparatus according to the present invention will now described in detail with reference to the drawings.

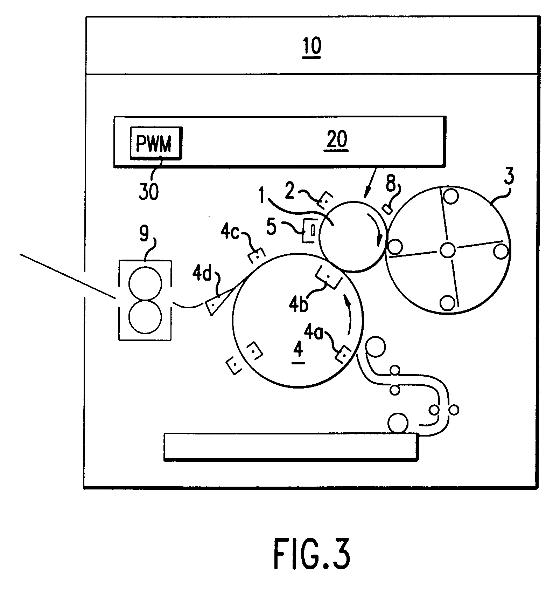

Fig. 3 illustrates an image formation apparatus having a light sensitive member 1 that rotates in a direction indicated by the arrow. An electrostatic latent image formation charger 2, rotation developing device 3, transfer drum 4 and cleaner 5 are positioned around the light sensitive member 1. The light sensitive member 1 is uniformly charged by a charger 2 at a darkened portion of the apparatus.

A light beam scanning device 20 scans the light sensitive member 1 with a light beam. An OFF-ON control on the light beam is performed by a light beam pulse width modulation device 30, and is based, in part, on a density signal output from a document reading component 10. Thus, exposure of the light sensitive member 1 is conducted, and an electrostatic image is formed. The spot diameter $1/e^2$ of the light beam in the main scanning direction on the light sensitive member 1 is set at an appropriate value, for example, at 75μm.

The rotation developing device 3 comprises four subordinate developing devices, having toner colors of, for example, yellow, cyan, magenta and black, respectively. Each subordinate developing device adopts a reverse developing method using a two-component magnetic brush development method. The average diameter of the toner is, for example, generally 7μm. The rotation developing device 3 rotates and an electrostatic latent image is developed with a toner of the desired color. A development bias voltage is then applied to the developing roller to prevent attachment of toner to blank portions of the developing roller. The transfer drum 4 has a recording sheet attached to a peripheral surface when rotated. The toner image on the light sensitive member 1, which has been developed, is then transferred to the recording sheet by a transfer device 4b.

The electrostatic latent image formation, development and transfer are carried out for each color. The toner that is transferred to the recording sheet is fixed by a fixing device 9. Thus, a multi-color image is formed.

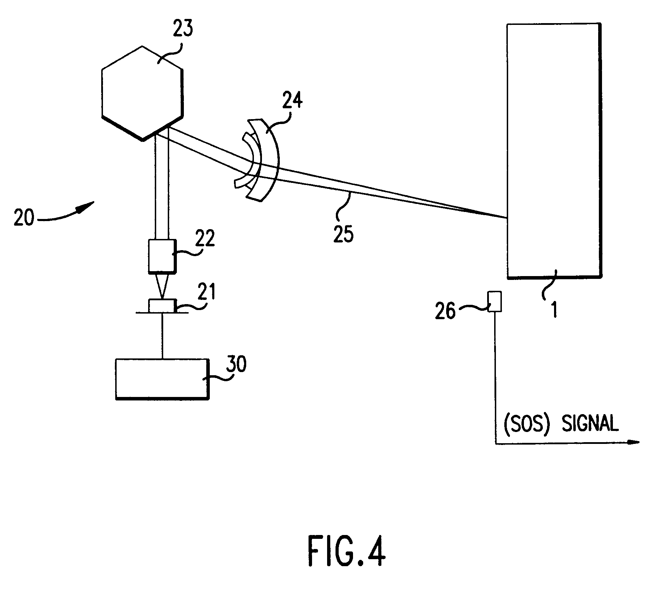

Fig. 4 illustrates the light beam scanning device 20. The light beam scanning device 20 includes a laser 21 (such as, for example, a semiconductor laser), a collimator lens 22, a polygonal mirror 23, an f-⊙ lens 24 and a scanning start signal generation sensor 26, which generates a start of scanning SOS signal for detecting the timing of the start of a light beam scanning.

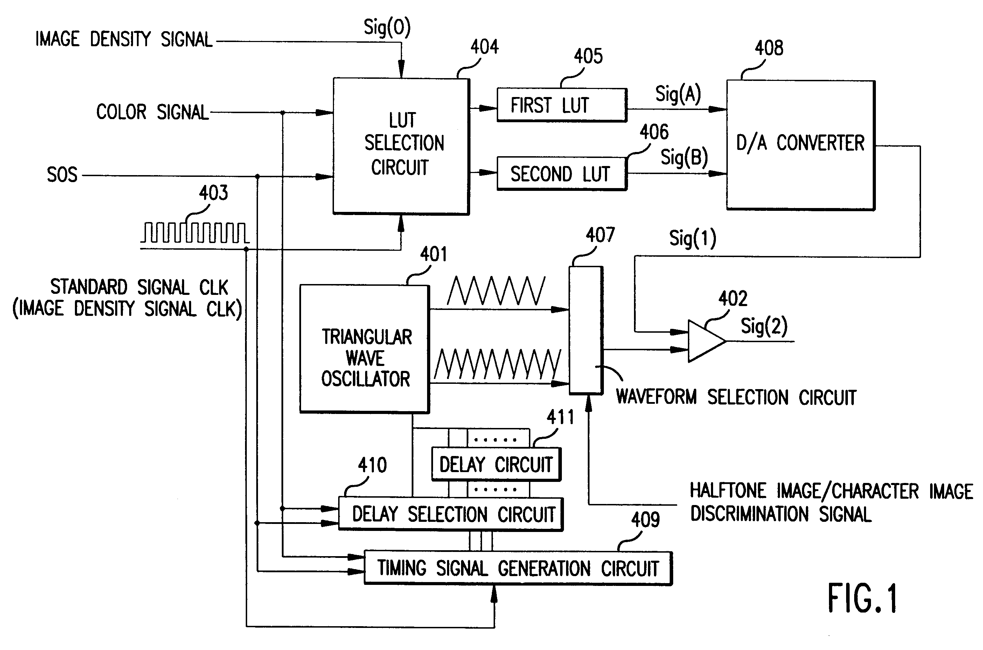

As shown in Fig. 1, the light beam pulse width modulation device 30 includes a triangular wave oscillator 401, a timing signal generation circuit 409, a delay selection circuit 410, a delay circuit 411, a waveform selection circuit 407, a comparison circuit 402, a first lookup table LUT A 405, a second lookup table LUT B 406, a D/A converter 408 and a LUT selection circuit 404.

The LUT selection circuit 404 includes a counter, a flip-flop circuit or the like, which counts a standard clock signal (an image density signal clock), a color signal and the SOS signal. The LUT selection circuit 404 periodically and distributionally outputs a digital image density signal from the document reading component 10 to the first lookup table LUT A 405 and the second lookup table LUT B 406.

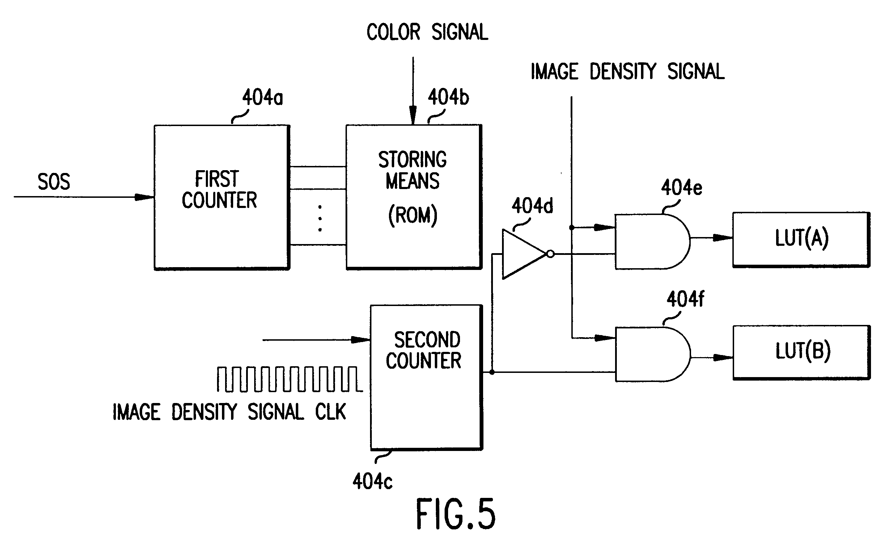

Fig. 5 illustrates an example of the LUT selection circuit 404. The LUT selection circuit 404 includes a counter 404a for counting the start of scanning (SOS) signal; a selector 404b that may include a ROM for storing an initial counted value determining a phase of an image density conversion means selection signal and selecting and outputting the stored value based on in part the output value of the first counter; and a counter 404c, whose initial value is set based on in part the output of the selector 404b. Thus, the image density clock signal is divided for generation at every SOS signal, while the phase is shifted. The image density signal is synchronized with the image density signal clock by NOT circuit 404d, AND circuits 404e and 404f. The image density signal is periodically and distributionally output to the first lookup table LUT A 405 and the second lookup table LUT B 406.

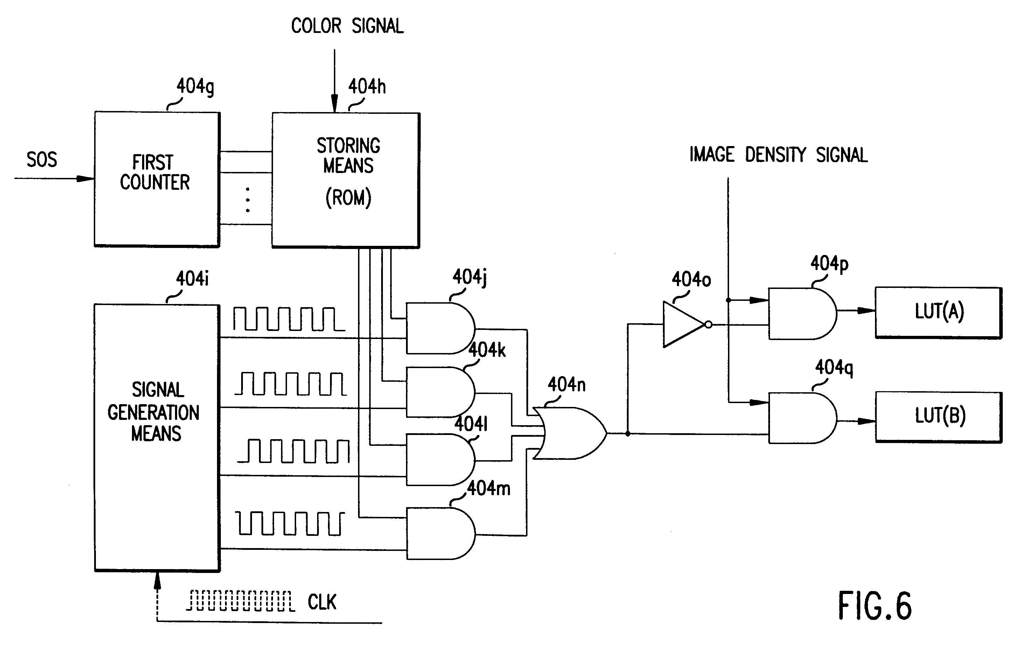

Fig. 6 illustrates another example of the LUT selection circuit 404. In Fig. 6, the LUT selection circuit includes a counter 404g for counting an SOS signal; a selector 404h that may be a ROM; a clock division delay circuit 404i; AND circuits 404j, 404k, 404l, 404m and OR circuit 404n. The image density signal or standard clock signal is divided by a clock division delay circuit 404i to generate a clock with different phases, selected by AND circuits 404j, 404k, 404l and 404m based, in part, on the output of the selector 404h for every generation of an SOS signal. The NOT circuit 404o and the AND circuits 404p and 404q synchronize the image density signal with the image density clock, for periodic and distributional output to the first lookup table LUT A 405 and the second lookup table LUT B 406.

The digital image density signal is converted into digital data by the first lookup table LUT A 405 and the second lookup table LUT B 406, each of which have different properties. Further, the distributed digital image density signal is converted and synthesized into an analog image density signal and be input to the comparison circuit 402.

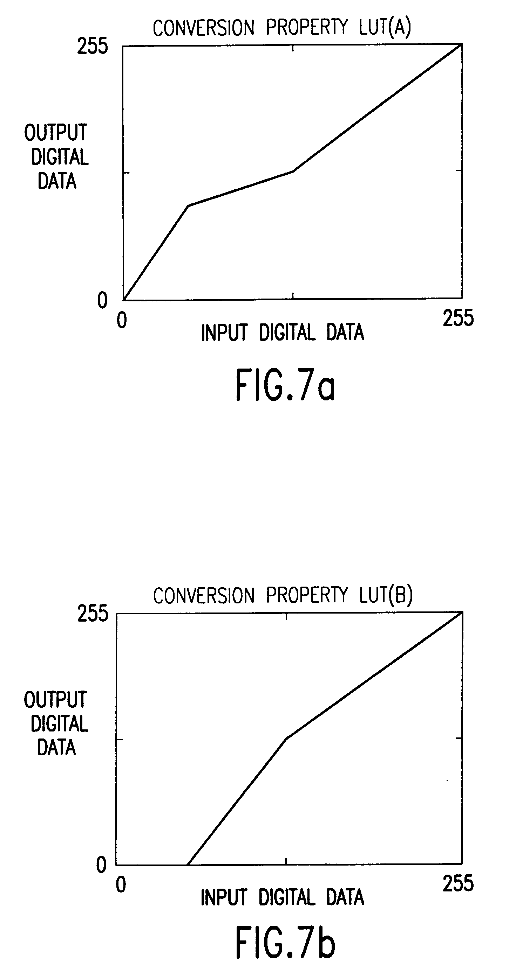

Figs. 7a and 7b illustrate conversion properties or factors of the first lookup table LUT A 405 and the second lookup table LUT B 406, where 8 bits of input digital data are converted into 8 bits of output digital data. The triangular wave oscillator 401 generates two types of pattern signals, a triangular waveform or a modulation reference wave signal, for pulse width modulation to form a screen pattern. The periods of the respective pattern signals correspond to 400 line per inch (hereinafter lpi) and 200 lpi. Since the spot diameter $1/e^2$ of the light beam in the main scanning direction on the light sensitive member 1 is set at, for example, $75\mu m$, the values for D are 1.17 for 400 lpi and 0.59 for 200 lpi.

The timing signal generation circuit 409 sets the standard clock signal 403 to a double period based, in part, for example, on the SOS signal and the color signal output pattern signal clock. The delay selection circuit 410 selects the pattern signal clock generated by the timing signal generation circuit 409, and outputs the pattern signal clock to the delay circuit 411 based, in part on the SOS signal. The delay circuit 411 determines a delay time based, in part, on which line the pattern signal clock passes through. Thereby, the pattern signal clock has the same period but different delay times for each of lines that are output.

For example, for generating a screen angle of -63.4°, which corresponds to 200 lpi in the pattern signal clock with a period corresponding to 200 lpi, the pattern signal clocks for the second, third and fourth lines are delayed by 1/4, 2/4, and 3/4, respectively, compared to the pattern signal clock for the first line. For a screen angle of +63.4°, the pattern signal clocks for the second, third and fourth lines are delayed by 3/4, 2/4 and 1/4, respectively, compared to the pattern signal clock for the first line.

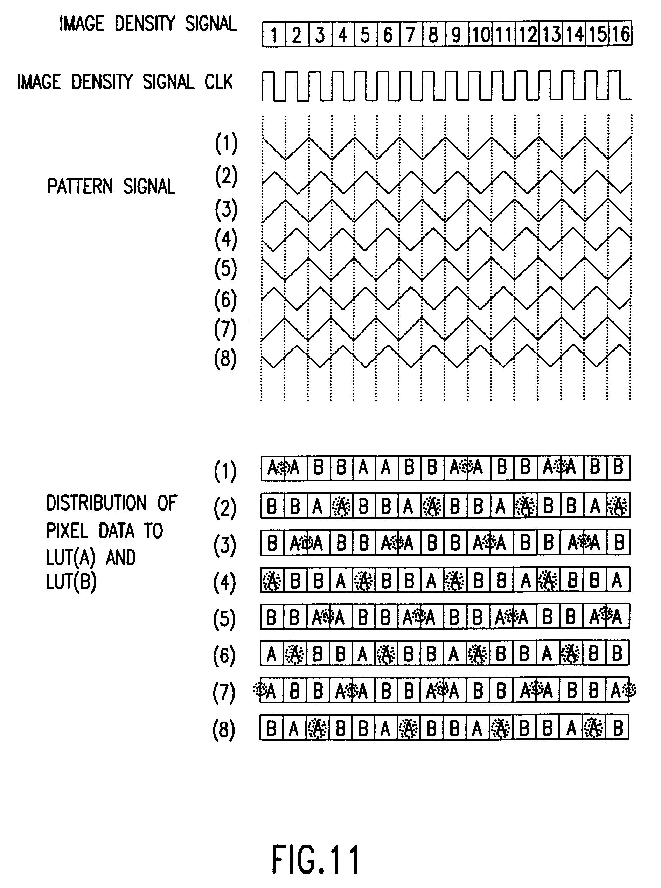

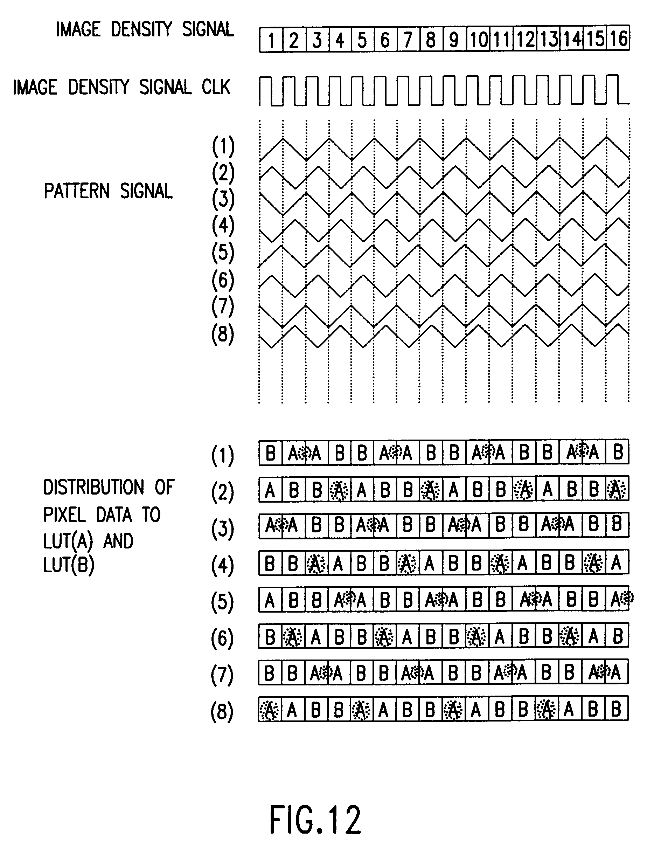

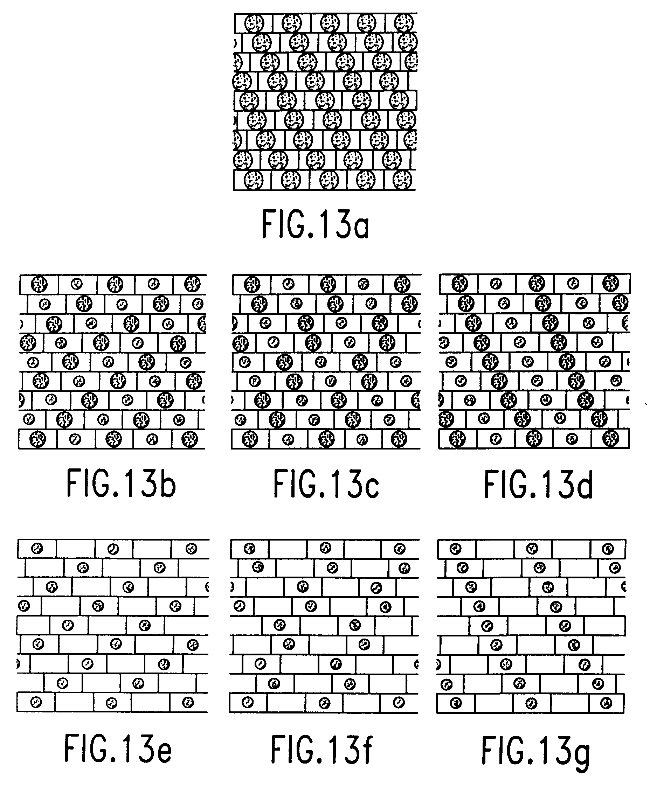

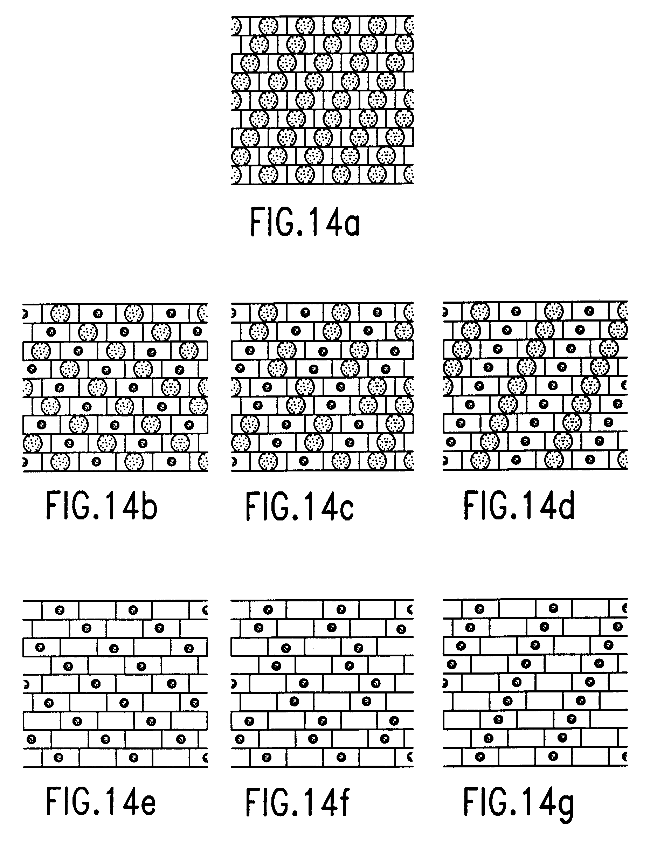

When the pattern signal clock, which has different delay times for each line, is input to a triangular wave oscillator 401 with a 4-line period, a pattern signal with a period corresponding to 200 lpi, varies the delay time in the 4-line period output by the triangular wave oscillator 401, as shown in Figs. 11 and 12. The pattern signal can then be input to one of the terminals of a comparator 402. At that time, when an analog pixel signal with a uniform level is input to another terminal of the comparator 402, the analog pixel signal is compared with the pattern signal each line, as in Figs. 13(a) and 14(a). Thus, forming screen angles of -63.4° and +63.4°, which correspond to 200 lpi, may be formed.

The waveform selection circuit 407 selects a waveform based, in part, on a halftone image/character image discrimination signal output by a halftone image/character image discrimination means (not shown). When an image is determined to be a character image with a halftone image/character image discrimination signal, a pattern signal corresponding to 400 lpi is selected. The pattern signal corresponding to 400 lpi is generated by the pattern signal clock, and does not pass through the delay circuit 411. Otherwise, if the image is a halftone image, a pattern signal corresponding to 200 lpi is selected.

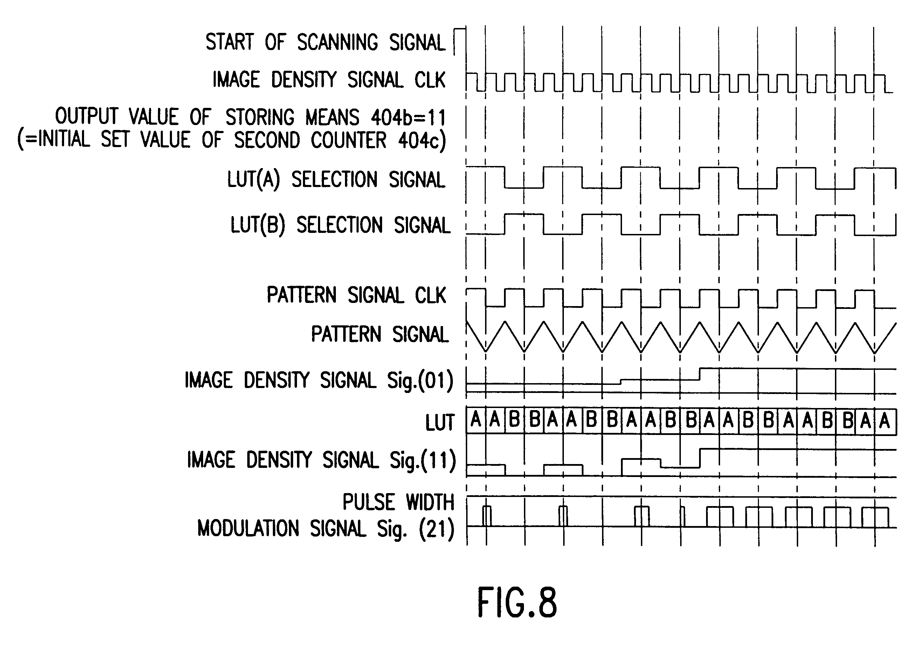

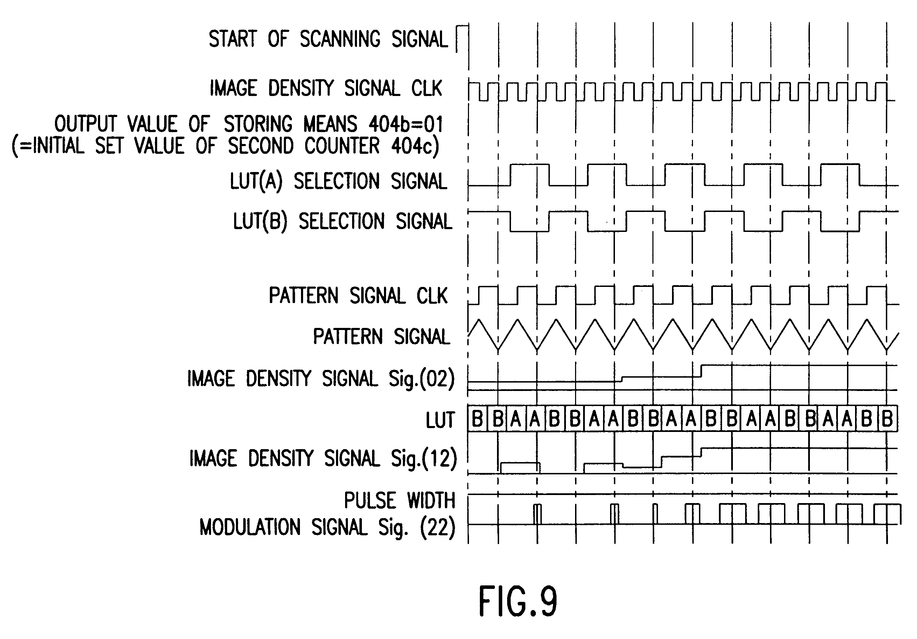

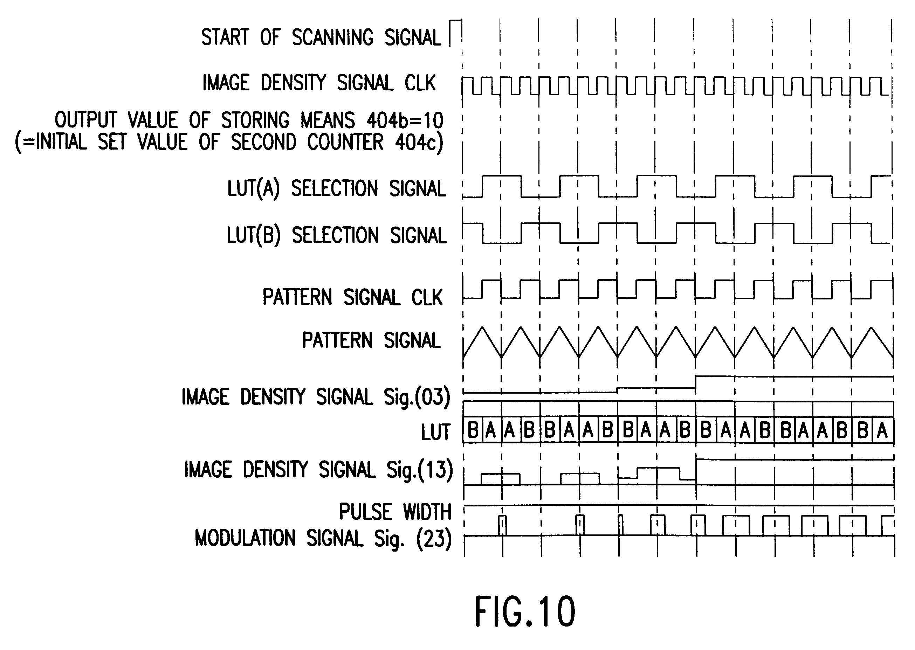

A comparison circuit 402 compares the size of each pattern signal with the size of the analog image density signal, and generates a pulse width modulation signal. Figs. 8-11 illustrate a waveform generation process with the pulse width modulation device. The phase of the pattern signal, which has a period corresponding to 200 lpi, is shifted by 1/4 phase for every sub-scanning in a 4 line sub-scanning period. First, an image density signal Sig(01) is input to the LUT selection circuit 404, based, in part, on the count of the standard clock signal, the color signal and the SOS signal. The image density signal is periodically distributed to the first lookup table LUT A 405 and the second lookup table LUT B 406 to generate Sig(A) and Sig(B). Sig(A) and Sig(B) are synthesized by a D/A converter 408 to generate an analog image density signal Sig(11). The size of the analog image density signal Sig(11) is then compared with the pattern signal having a triangular waveform that corresponds to 200 lpi, generated by the triangular wave oscillator 401 and a pulse width modulation signal Sig(21). An ON-OFF control of a laser (such as, for example, a semiconductor laser) is performed based on the pulse width modulation signal Sig(21). Thereby, light beam scanning for a single line is complete, and an electrostatic latent image for a single line is formed.

The SOS signal for detecting the timing of start for light beam scanning is then generated, and light beam scanning for the next single line started. The light beam scanning is again started and based on the count of the standard clock signal, color signal and SOS signal. The SOS signal is counted by the counter 404a of the LUT selection circuit 404. The selector 404b sets the counter 404c based on the output of the counter 404a and the color signal. The selection 404b also changes the distribution order of the image density signal Sig(02) to the first lookup table LUT A 405 and the second lookup table LUT B 406. The image density signal Sig(02) is input to the LUT selection circuit 404 and is periodically distributed to the first lookup table LUT A 405 and the second lookup table LUT B 406, with a desired phase to generate Sig(A) and Sig(B).

A pulse width modulation signal Sig(22) is generated in a manner as described above. The on-off control is performed on the laser, for example, a semiconductor laser based on in part completing the pulse width modulation signal Sig(22) and light beam scanning. Thus, an electrostatic latent image for another single line is formed. Therefore, electrostatic latent images for two lines are complete.

For the third line, the image density signal Sig(03) is input to the LUT selection circuit 404, again based on the count of the standard clock signal, the color signal and the SOS signal, to generate a pulse width modulation signal Sig(23). The ON-OFF control is performed on the laser based on the pulse width modulation signal Sig(23). Thus, an electrostatic latent image for the third line is formed.

The LUT selection circuit 404 changes distribution order of the image density signal to the first lookup table LUT A 405 and the second lookup table LUT B 406 for every scanning (i.e. every line, over 8 scanning processes for an 8-line period, as shown, for example, in Figs. 11 and 12). As a result, electrostatic latent image portions are formed indicated by dots, as if a uniform low density signal is input.

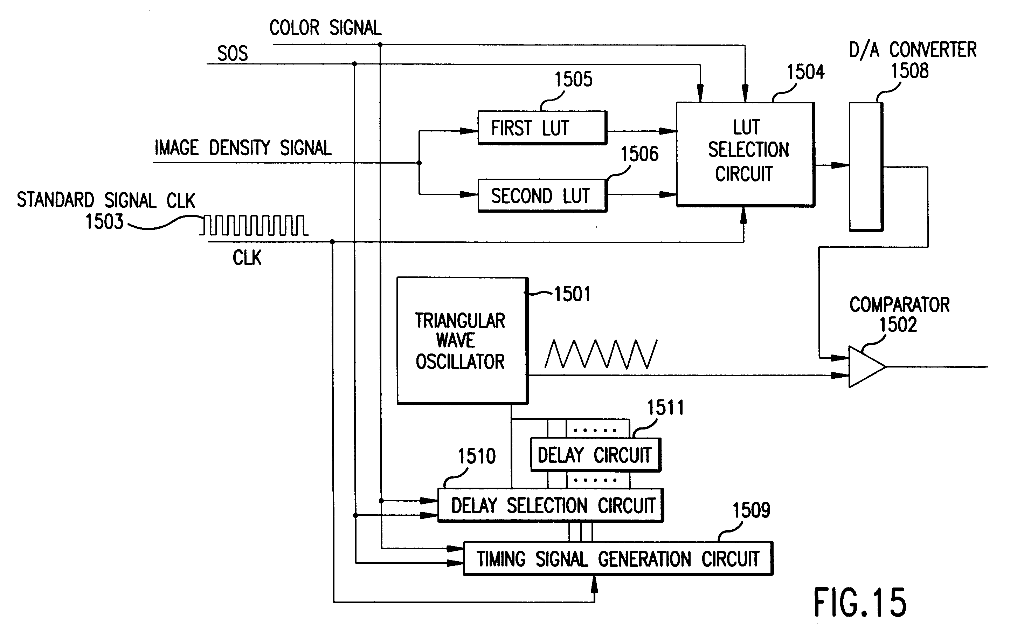

Fig. 15 illustrates another embodiment of a pulse width modulation device for the image formation apparatus. The image formation apparatus inputs image density signals to a first lookup table LUT A 1505 and a second lookup table LUT B 1506, which are in parallel, and conducts signal conversion. The image formation apparatus can select signals via an LUT selection circuit 1504 based on a standard clock signal, a color signal and an SOS signal to synchronize the selected signals, and output the selected signals to a D/A converter 1508.

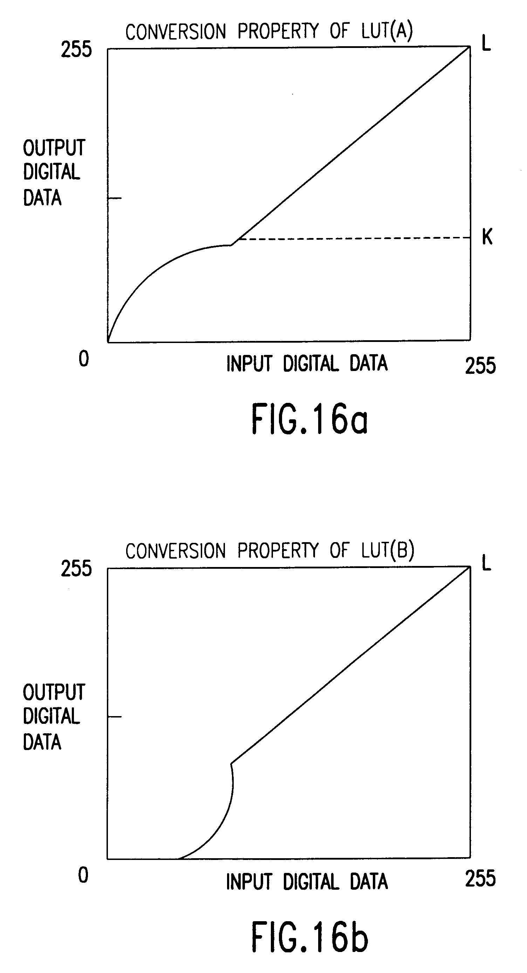

In Fig. 16, the conversion properties of the first lookup table LUT A 1505 and the second lookup table LUT B 1506 convert 8 bits of input digital data into 8 bits of output digital data. The triangular pulse wave oscillator 1501, which generates a pattern signal corresponding to 200 lpi, may be the same as discussed above.

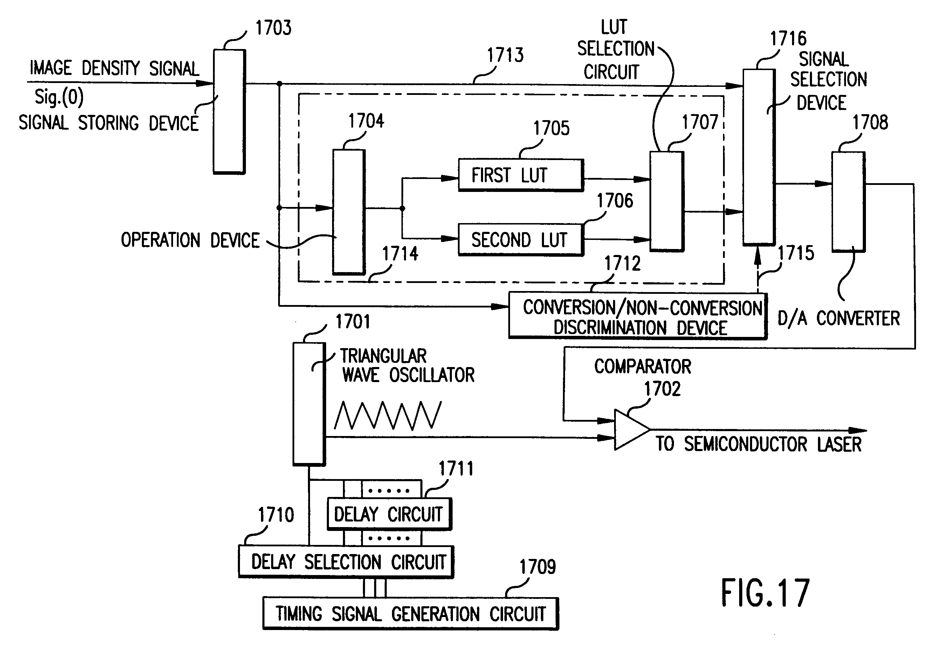

Fig. 17 illustrates another embodiment for the image formation apparatus. The image formation apparatus includes a signal storing device 1703, an operation device 1704, a conversion/non-conversion discrimination device 1712 and a signal selection device 1716 for achieving high reproduction capability of a line image. For example, in the digital image density signals of 400 lpi may be arranged in the direction of main scanning. Four of these digital image density signals are stored by the signal storing device 1703, and forwarded to a conversion/non-conversion discrimination device 1712, an image signal line-reduction conversion device 1714 and a non-conversion path 1713.

The conversion/non-conversion discrimination device 1712 can carry out a conversion/non-conversion discrimination, based on the comparison of values for each of the four stored image density signals to a predetermined threshold value. The conversion/non-conversion discrimination device 1712 transmits a conversion/non-conversion discrimination signal to a signal selection device 1716. The conversion/non-conversion discrimination device 1712 generates a discrimination signal that indicates that a conversion has been conducted when all values of four stored image density signals are smaller than a threshold value, or that a conversion has not been carried out for other situations. The discrimination signal is transmitted to the signal selection device 1716. Moreover, logic circuitry may be added, so the values of the four stored image density signals can be compared with a predetermined threshold difference value. Conversion is conducted if all of the differences of the values are smaller than the threshold value. Otherwise no conversion occurs.

The non-conversion path 1713 is directly connected to the signal selection device 1716 to transmit the stored image density signal to the signal selection device 1716 without conversion. The signal transmitted to the image density line-reduction conversion device 1714 can then be further transmitted to the operation device 1704 to generate an image density signal, representing the four stored image density signals. For example in this embodiment, the representative signal is a mean signal of the four stored signals.

The first lookup table LUT A 1705 and the second lookup table LUT B 1706 convert the data output from the operation device 1704, to generate image density signals. As in the first embodiment, the LUT selection circuit 1707 can select two image density signals that are converted by the first lookup table LUT A 1705 and the second lookup table LUT B 1706, in order with the desired phases. The LUT selection circuit 1707 makes its selection based on the count of the standard clock signal, the color signal and the SOS signal (not shown). The signals are then transmitted to the signal selection device 1716.

The signal selection device 1716 selects either an image density signal, from the non-conversion path 1713, or an image density signal, converted by the conversion device 1714, based on in part the conversion/non-conversion discrimination signal. The selected image density signal is then transmitted to the D/A converter 1708, which converts the transmitted digital image density signal into an analog image density signal. The comparison circuit 1702 then compares the size of the triangular wave pattern signal with the size of the analog image density signal, to generate a pulse width modulation signal.

For example, where a halftone image is formed by the pulse width modulation device according to the first preferred embodiment of this invention, the halftone image is formed on a 200 lpi screen, with a screen angle of -63.4° or +63.4°, if the digital image density signal of 50% or more in the halftone area. Figs. 13a and 14a show pixel arrangements when an image density signal is 60% in a halftone area.

Moreover, a halftone area, where the image density signal is 20% or more and less than 50%, can alternately define an image density signal converted by the first lookup table LUT A 405 and the D/A converter, and also a portion where the image density signal is converted by the second lookup table LUT B 46 and the D/A converter. In an area where the digital image density signal is about 20%, the image density signal portion, which is converted by the second lookup table LUT B 406 and the D/A converter, has little or no contribution to image formation. Different size pixels can be alternately formed in the main and sub-scanning directions by the distribution order of the image density signal to the first lookup table LUT A 405 and the second lookup table LUT B 406, in synchronization with the image density signal clock, and the periodic switching of the sub-scanning direction.

Figs. 13b and 14b illustrate pixel arrangements where the image density signal is 30%, which corresponds to a 200 lpi screen with a screen angle of -63.4° or +63.4°. Figs. 13c, 13d, 14c and 14d illustrate pixel arrangements formed by changing or switching the periodic distribution order of the image density signal to the first lookup table LUT A 405 and the second lookup table LUT B 406.

Moreover, in a halftone area where the digital image density signal is less than 20%, only the image density signal, which is converted by the first lookup table LUT A 405 and the D/A converter, may contribute to image formation. A halftone image is formed with the same pixel density as that of a 100 lpi screen, which is half density of the 200 lpi screen, since the distribution order of the image density signal to the first lookup table LUT A 405 and the second lookup table LUT B 406 can be operated in synchronization with the image density signal clock, and periodic switching of the sub-scanning direction. Therefore, the reproducibility of dots and lines in a low density portion and the stability of reproduction of gradation or tones is improved.

Figs. 13e and 14e illustrate pixel arrangements where the image density signal is 15%, which corresponds to the 200 lpi screen with a screen angle of -63.4° or +63.4°. Figs. 13f, 13g, 14f and 14g illustrate pixel arrangements formed by changing the periodic distribution order of the image density signal to the first lookup table LUT A 405 and the second lookup table LUT B 406.

In the second embodiment, the pixel arrangements shown in Figs. 13a-13g and 14a-14g are formed, similar to the first embodiment, by changing the periodic distribution order of the image density signal to the first lookup table LUT A 1505 and the second lookup table LUT B 1506, via the LUT selection circuit 1504, based on the count of the standard clock signal, the color signal and the SOS signal.

In the third embodiment, pixel arrangements shown in Figs. 13a-13g and 14a-14g, are also formed, as in the first embodiment, by changing the periodic distribution order of the image density signal converted by the operation device 1704, to that of the first lookup table LUT A 1705 and the second lookup table LUT B 1706 by the LUT selection circuit 1707.

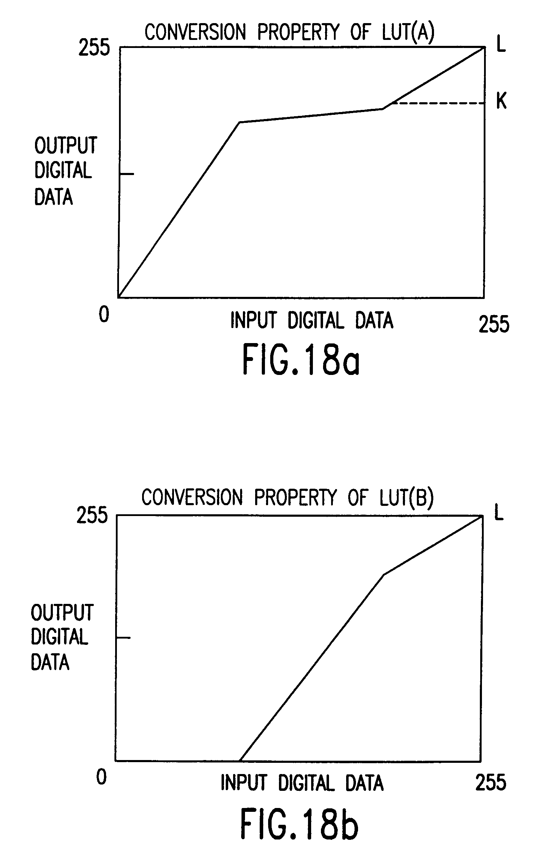

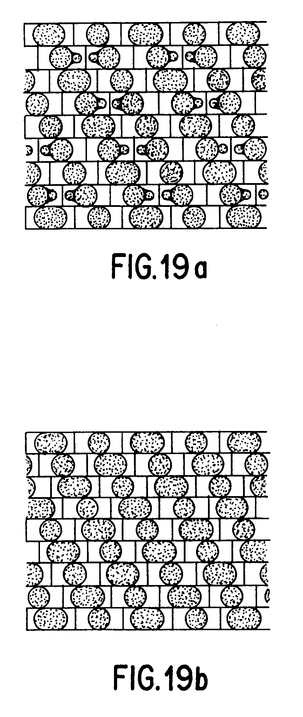

As a comparative example with the conversion properties or factors illustrated in Figs. 18a and 18b, an image formation is conducted similar to the first embodiment, except that the image density signal conversion means is changed to a first lookup table LUT A and the second lookup table LUT B. Fig. 19a illustrates pixel arrangements where the image density signal is 60%, which corresponds to the 200 lpi screen with a screen angle of -63.4°. When the largest converted value of the image density signal, where at least two image density signal conversion means have different properties or factors, exceeds 50% of the number of gradations of the image density signal, the desired image construction, as shown in Fig. 19b, cannot be obtained.

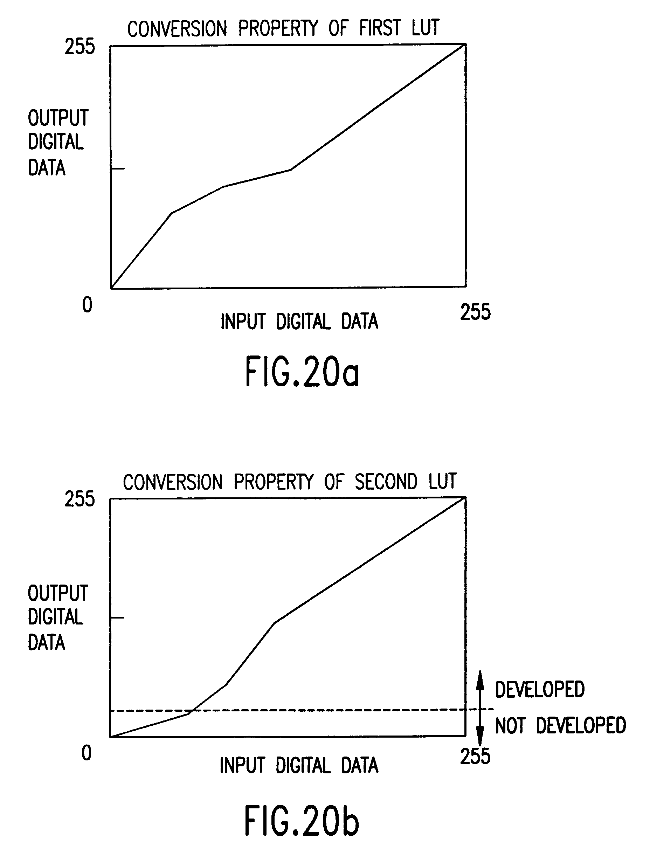

In each of the embodiments discussed above, at least two image density signal conversion means have a property where the output of one of the image density conversion means for the low density portion is at 0. However, it is possible to make the output for the low density portion of one of the image density signal conversion means to have a value within a range corresponding to a portion that is not developed. An example of this image density conversion means property or factor is shown in Figs. 20a and 20b.

In the light beam scanning device, shown in Fig. 4, image development is performed, for example, by a laser with a 5% pulse width, 13 digital data of 8 bits, or more, because the laser diode does not respond to an extremely small input signal. Further, a development bias potential prevents attachment of toner to a blank portion. The output for the low density portion in Fig. 20b is set to less than the above value, so the output for the low density portion is not developed. Alternatively, as shown in Fig. 20a, the low density portion, where the output is at least 13 digital data, and accordingly the output is developed in the area. Therefore, dots or lines form a concentrated input image. It is thus possible to perform image formation with reduced lines for a low density screen image, as in each of the first three embodiments.

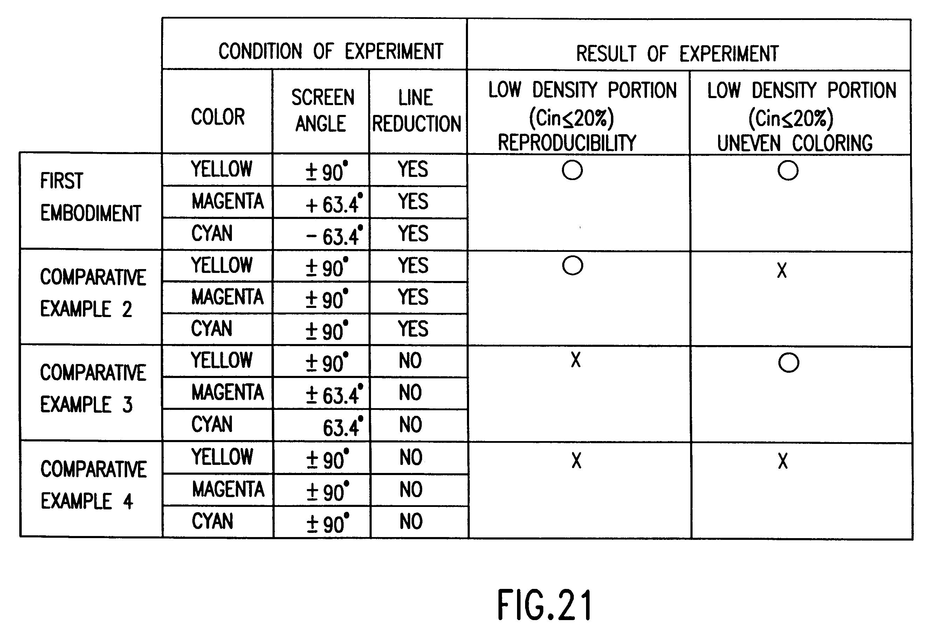

To evaluate the reproduction stability of gradation and tones and unevenness of third color of the images formed by utilizing the pulse width modulation device of the first embodiment of the image formation apparatus and by the comparative example described above, experiments have been conducted. A modified A-Color machine, a product name for a digital color copying machine manufactured by Fuji Xerox Co., Ltd., is used. Conditions for the experiment and the results are shown in Fig. 21. All images are formed using a pattern signal with triangular pulse wave have a period corresponding to the 200 lpi screen. Among the conditions shown in Fig. 21, "±90° screen angle" means a conventional 200 lpi screen, in which a phase shift for every sub scanning does not occur. "±90° screen angle with line reduction processing" means that a line reduction process is performed.

The reproduction stability of gradation and tones, depending on environments in the low density portion is improved, as seen in Fig. 21. Moreover, a change of hues or zonal uneven coloring, which may be caused by slight shifting of pixel arrangement period due to machine oscillation, irregular scanning in a printer, registration error in paper feeding, uneven paper carrying speed or the like, is reduced and difficult to recognize. Thus, image quality is improved.

According to the present invention, line reduction in the low density portion of the image density signal and image formation with a predetermined screen angle are both possible due to plural image density signal conversion means. These can have different gradation reproduction properties and can be operated in synchronization with an image density signal clock. The plural image density signal conversion means can be periodically selected, based on the selection signal, with a longer period than that of the image density signal clock. Moreover, the phase of the selection signal can be changed for one or plural processing of exposure scanning. Consequently, it may be possible to improve the reproduction stability of gradation or tones, and reduce uneven coloring or change of hues that caused by, for example, pixel registration error. Thus, a high image quality without using a process controller, a luminous intensity changing device, or a beam imaging optical system, which are precise, complex and expensive, can be achieved.

The foregoing description of preferred embodiment of this invention has been presented for purposes of illustration and description. The description and examples discussed therein are not intended to be exhaustive or to limit the invention to the precise form disclosed, and modifications and variations are possible in light of the above teachings or may be acquired from practice of the invention. The preferred embodiments were chosen and described to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

**Claims**

1. An image forming apparatus comprising:

first image density signal conversion means (405, 1505, 1705) which has a first conversion property, for converting a multi-valued image density input signal to an image density output signal, wherein the image density output signal is in synchronization with an image density signal clock;

second image density signal conversion means (406, 1506, 1706), which has a second conversion property different from the first conversion property, for converting a part of the image density input signal corresponding to a low density portion to an image density output signal indicating a range or a value within the range where an image is not developed;

selection signal generation means (404a-404d, 404g-404o) for outputting a selection signal, which has a longer period than that of the image density signal clock, to select the first or second image density signal conversion means in a predetermined order, the phase of the selection signal being shifted at for least every one or more main scanning synchronizing signals;

pattern signal generation means (401) for generating a pattern signal with a longer period than the image density signal clock;

phase control means (409) for shifting the phase of the pattern signal generated by the pattern signal generation means for at least every one or more of the main scanning synchronization signals, to form a screen image with a predetermined screen angle;

pulse width modulation means (401, 1501, 1701) for outputting a pulse width modulation signal generated by modulating pulse width of the image density output signal from the first and second image density signal conversion means utilizing the pattern signal; and

image formation means (1-9, 20) for forming an image based on the pulse width modulation signal from the pulse width modulation means.

2. The image forming apparatus according to claim 1, wherein said predetermined order is in general substantial synchronization with the image density signal clock.

3. The image forming apparatus according to any of the preceding claims,

wherein the first conversion property converts a part of the image density input signal corresponding to the low density portion to an image density output signal indicating another range or another value within said other range where an image is developed.

4. The image forming apparatus according to any of the preceding claims,

wherein the selection signal generation means comprises:

a first counter (404a, 404g) for counting the main scanning synchronizing signals and outputting a signal showing the number of the main scanning synchronizing signals;

memory means (404b, 404h) for storing an initial counter value to determine the phase of the selection signal, and selecting and outputting the initial counter value based on the signal from the first counter; and

a second counter (404c) initialized by the initial counter value from the memory means and for dividing the image density signal clock to generate the selection signal.

5. The image forming apparatus according to claim 4, wherein the selection signal generation means further comprises:

signal generation means for generating at least one and preferably plural signals with different phases by dividing the image density signal clock; and

selection means for selecting one signal from the plural signals having different phases from the signal generation means based on the output of the memory means, and outputting the selected signal as a selection signal.

6. The image forming apparatus according to any of the preceding claims, wherein

L is the number of gradations of the image density output signal and K is a maximum value of the image density output signal in an area where the first and second image density signal conversion means have different conversion properties, the apparatus satisfies the condition: $K/L \leqq 1/2$ .

7. The image forming apparatus according to any of the preceding claims, wherein the image formation means comprises:

light beam scanning means for relatively scanning a light sensitive medium with a light beam;

an image formation optical system converging the light beam of the light beam scanning means to form a light beam spot of a predetermined size on the light sensitive medium; where

$$d_B \leqq (1/3)d_p,$$

where $d_p$ (mm) is the distance between adjacent light beam spots in a main scanning direction on the light sensitive medium and $d_B$ (mm) is the light beam spot diameter in the main scanning direction for forming an image when the image density output signal indicates a value within a range in which the image is not developed.

8. An image forming apparatus comprising:

first image density signal conversion means (405, 1505, 1705) for converting multi-valued image density input signal to an image density output signal using a first conversion property;

second image density signal conversion means (406, 1506, 1706), which has a second conversion property different from the first conversion property, for converting a part of the image density input signal corresponding to a low density portion to an image density output signal indicating a range where an image may not be developed;

conversion/non-conversion discrimination means (1712) for determining whether a conversion by the first and second image density signal conversion means has been conducted on at least one and preferably each group of adjacent image density input signals;

signal selection means (1716) for selecting one of the output with conversion, of each group of the image density input signals by the first and second image density signal conversion means and the output, without conversion, of each group of the image density input signals by the first and second image density signal conversion means based on a result of the conversion/non-conversion discrimination means;

selection signal generation means (404a-404d) for outputting a selection signal to select the first or second image density signal conversion means in a predetermined order, a phase of the selection signal being shifted for at least each one or more of the main scanning synchronizing signals;

pattern signal generation means (401) for generating a pattern signal;

phase control means (409) for shifting the phase of the pattern signal generated by the pattern signal generation means for at least each one or more of the main scanning synchronizing signals to form a screen image with a predetermined screen angle;

pulse width modulation means (401, 1501, 1701) for outputting a pulse width modulation signal generated by modulating a pulse width of the signal output from the signal selection means using the pattern signal; and

image formation means (1-9, 20) for forming an image based on the pulse width modulation signal from the pulse width modulation means.

9. The image forming apparatus according to claim 8, further comprising:

operation means for performing a predetermined operation on at least one image density input signal in each group of adjacent image density input signals to obtain an image density synthesizing signal, and for inputting the image density synthesizing signal to the first and second image density signal conversion means.

10. A method for forming an image using image forming apparatus as set forth in any one of the preceding claims.

FIG.1

FIG.2a

FIG.2b

FIG.2c

FIG.3

FIG.4

COLOR SIGNAL

IMAGE DENSITY SIGNAL

SOS

404a

FIRST
COUNTER

404b

STORING
MEANS
(ROM)

404d

404e

LUT(A)

SECOND
COUNTER

404f

LUT(B)

IMAGE DENSITY SIGNAL CLK

404c

FIG.5

EP 0 717 552 A2

FIG.6

CONVERSION PROPERTY LUT(A)

**FIG.7a**

CONVERSION PROPERTY LUT(B)

**FIG.7b**

FIG.8

START OF SCANNING SIGNAL

IMAGE DENSITY SIGNAL CLK

OUTPUT VALUE OF STORING MEANS 404b=11
(=INITIAL SET VALUE OF SECOND COUNTER 404c)

LUT(A) SELECTION SIGNAL

LUT(B) SELECTION SIGNAL

PATTERN SIGNAL CLK

PATTERN SIGNAL

IMAGE DENSITY SIGNAL Sig.(01)

LUT

IMAGE DENSITY SIGNAL Sig.(11)

PULSE WIDTH MODULATION SIGNAL Sig. (21)

EP 0 717 552 A2

FIG.9

START OF SCANNING SIGNAL

IMAGE DENSITY SIGNAL CLK

OUTPUT VALUE OF STORING MEANS 404b=01
(=INITIAL SET VALUE OF SECOND COUNTER 404c)

LUT(A) SELECTION SIGNAL

LUT(B) SELECTION SIGNAL

PATTERN SIGNAL CLK

PATTERN SIGNAL

IMAGE DENSITY SIGNAL Sig.(02)

LUT

IMAGE DENSITY SIGNAL Sig.(12)

PULSE WIDTH
MODULATION SIGNAL Sig. (22)

EP 0 717 552 A2

FIG.10

EP 0 717 552 A2

IMAGE DENSITY SIGNAL

| 1 | 2 | 3 | 4 | 5 | 6 | 7 | 8 | 9 | 10 | 11 | 12 | 13 | 14 | 15 | 16 |

IMAGE DENSITY SIGNAL CLK

PATTERN SIGNAL

(1)
(2)
(3)
(4)
(5)
(6)
(7)
(8)

DISTRIBUTION OF PIXEL DATA TO LUT(A) AND LUT(B)

(1) A A B B A A B B A A B B A A B B
(2) B B A A B B A A B B A A B B A A
(3) B A A B B A A B B A A B B A A B
(4) A B B A A B B A A B B A A B B A
(5) B B A A B B A A B B A A B B A A
(6) A A B B A A B B A A B B A A B B
(7) A B B A A B B A A B B A A B B A
(8) B A A B B A A B B A A B B A A B

FIG.11

23

IMAGE DENSITY SIGNAL

| 1 | 2 | 3 | 4 | 5 | 6 | 7 | 8 | 9 | 10 | 11 | 12 | 13 | 14 | 15 | 16 |

IMAGE DENSITY SIGNAL CLK

PATTERN SIGNAL

(1)
(2)
(3)
(4)
(5)
(6)
(7)
(8)

DISTRIBUTION OF PIXEL DATA TO LUT(A) AND LUT(B)

(1) | B | A | A | B | B | A | A | B | B | A | A | B | B | A | A | B |

(2) | A | B | B | A | A | B | B | A | A | B | B | A | A | B | B | A |

(3) | A | A | B | B | A | A | B | B | A | A | B | B | A | A | B | B |

(4) | B | B | A | A | B | B | A | A | B | B | A | A | B | B | A | A |

(5) | A | B | B | A | A | B | B | A | A | B | B | A | A | B | B | A |

(6) | B | A | A | B | B | A | A | B | B | A | A | B | B | A | A | B |

(7) | B | B | A | A | B | B | A | A | B | B | A | A | B | B | A | A |

(8) | A | A | B | B | A | A | B | B | A | A | B | B | A | A | B | B |

# FIG.12

FIG.13a

FIG.13b

FIG.13c

FIG.13d

FIG.13e

FIG.13f

FIG.13g

FIG.14a

FIG.14b  FIG.14c  FIG.14d

FIG.14e  FIG.14f  FIG.14g

FIG.15

EP 0 717 552 A2

CONVERSION PROPERTY OF LUT(A)

255 ⎯ L

OUTPUT
DIGITAL
DATA

K

0 ⎯ INPUT DIGITAL DATA 255

## FIG.16a

CONVERSION PROPERTY OF LUT(B)

255 ⎯ L

OUTPUT
DIGITAL
DATA

0 ⎯ INPUT DIGITAL DATA 255

## FIG.16b

FIG.17

## CONVERSION PROPERTY OF LUT(A)

FIG.18a

## CONVERSION PROPERTY OF LUT(B)

FIG.18b

FIG.19 a

FIG.19b

EP 0 717 552 A2

CONVERSION PROPERTY OF FIRST LUT

FIG.20a

CONVERSION PROPERTY OF SECOND LUT

FIG.20b

| | CONDITION OF EXPERIMENT | | | RESULT OF EXPERIMENT | |
|---|---|---|---|---|---|
| | COLOR | SCREEN ANGLE | LINE REDUCTION | LOW DENSITY PORTION (Cin≤20%) REPRODUCIBILITY | LOW DENSITY PORTION (Cin≤20%) UNEVEN COLORING |
| FIRST EMBODIMENT | YELLOW | ±90° | YES | ◯ | ◯ |
| | MAGENTA | +63.4° | YES | | |
| | CYAN | −63.4° | YES | | |
| COMPARATIVE EXAMPLE 2 | YELLOW | ±90° | YES | ◯ | X |
| | MAGENTA | ±90° | YES | | |
| | CYAN | ±90° | YES | | |
| COMPARATIVE EXAMPLE 3 | YELLOW | ±90° | NO | X | ◯ |
| | MAGENTA | ±63.4° | NO | | |
| | CYAN | 63.4° | NO | | |
| COMPARATIVE EXAMPLE 4 | YELLOW | ±90° | NO | X | X |
| | MAGENTA | ±90° | NO | | |
| | CYAN | ±90° | NO | | |

FIG.21

EP 0 717 552 A2

PROCESSING DIRECTION

NORMAL PIXEL POSITION

FIG.22a

PROCESSING DIRECTION

PIXEL POSITION PROCESSING ERROR

FIG.22b

EP 0 717 552 A2

CONVERSION MEANS
SELECTION UNIT

234

235

FIRST LUT

IMAGE DENSITY SIGNAL

236

SECOND LUT

Sig(1)

+

Sig(2)

233

⊓⊔⊓⊔⊓⊔⊓⊔⊓⊔⊓⊔

231

237

TRIANGULAR
WAVE
OSCILLATOR

Ref(1)

Ref(2)

Sig(0)

232

TO SEMICONDUCTOR LASER

PWM(0)

SELECTION CIRCUIT

HALFTONE IMAGE/CHARACTER IMAGE
DISCRIMINATION SIGNAL

FIG.23